(19) Europäisches Patentamt
European Patent Office
Office européen des brevets

(11) **EP 4 571 672 A1**

(12) **EUROPEAN PATENT APPLICATION**
published in accordance with Art. 153(4) EPC

(43) Date of publication:
**18.06.2025 Bulletin 2025/25**

(21) Application number: **24766187.9**

(22) Date of filing: **12.01.2024**

(51) International Patent Classification (IPC):
***G06V 10/774*** *(2022.01)*     ***G06V 10/44*** *(2022.01)*
***G06T 7/10*** *(2017.01)*

(52) Cooperative Patent Classification (CPC):
**G06F 3/01; G06T 7/10; G06V 10/44; G06V 10/74; G06V 10/774**

(86) International application number:
**PCT/CN2024/071907**

(87) International publication number:
**WO 2024/183464 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.03.2023   CN 202310246891**

(71) Applicant: **Tencent Technology (Shenzhen) Company Limited**
**Shenzhen, Guangdong 518057 (CN)**

(72) Inventor: **HUANG, Zhongyi**
**Shenzhen, Guangdong 518057 (CN)**

(74) Representative: **Reddie & Grose LLP**
**The White Chapel Building**
**10 Whitechapel High Street**
**London E1 8QS (GB)**

(54) **IMAGE ANNOTATION PROCESSING METHOD AND APPARATUS, AND COMPUTER DEVICE, MEDIUM AND PROGRAM PRODUCT**

(57)     Disclosed in the embodiments of the present application are an image annotation processing method and apparatus, and a computer device and a readable storage medium. The method comprises: acquiring a support data set that comprises a support sample image and a query data set that comprises a query sample image; on the basis of an object boundary annotation of the support sample image, performing feature matching on the support sample image and the query sample image to obtain a feature relevancy of the query sample image, wherein the feature relevancy is used for performing prediction to obtain a center point prediction annotation of an object in the query sample image; on the basis of the center point prediction annotation, acquiring a first annotation probability graph of a center point distribution of the object in the query sample image; and on the basis of the first annotation probability graph and the query sample image, training a preset center point detector to obtain a trained center point detector, which is used for performing center point annotation on the object in the image. The embodiments of the present application can be applied to various scenarios such as cloud technology and artificial intelligence. The solution can realize automatic image annotation on the basis of reducing the volume of manually annotated data, thereby improving the image annotation efficiency.

FIG. 2

## Description

RELATED APPLICATION

This application claims priority to Chinese Patent Application No. 2023102468918, entitled "IMAGE ANNOTATION PROCESSING METHOD AND APPARATUS, COMPUTER DEVICE, AND READABLE STORAGE MEDIUM" filed with China National Intellectual Property Administration on March 7, 2023.

FIELD OF THE TECHNOLOGY

Embodiments of this application relate to the field of artificial intelligence technologies, and specifically, to image annotation.

BACKGROUND OF THE DISCLOSURE

With the rapid development of artificial intelligence and machine learning technologies, the artificial intelligence and machine learning technologies are used in increasingly more fields, and computer vision, as a field of artificial intelligence, has also been developed rapidly. To improve the performance of a model, the model generally needs to be trained with certain data annotations. For example, to make the model to learn detection on a handheld object, the model generally needs to annotate the handheld object in an image of the handheld object.

Data annotation is generally completed manually, and in the related art, to improve the data annotation efficiency, data is annotated by using an automatic annotation algorithm.

However, it is found in an actual research and development process: the automatic annotation algorithm needs to depend on a specific amount of manual annotation data, and the automatic annotation algorithm can accurately implement automatic data annotation only after being trained with a large amount of manual annotation data; and when a scenario changes, to enable the automatic annotation algorithm to adapt to a new scenario, the automatic annotation algorithm also needs to be finely adjusted or retrained with a large amount of manual annotation data. It can be learned that, the automatic annotation algorithm in the related art depends on a large amount of manual annotation data, leading to low image annotation efficiency.

SUMMARY

Embodiments of this application provide an image annotation processing method and apparatus, a computer device, a medium, and a program product, which can automatically annotate an image while reducing an amount of manual annotation data, thereby improving the image annotation efficiency.

According to a first aspect, an embodiment of this application provides an image annotation processing method, including:

obtaining a support data set and a query data set, the support data set including at least one support sample image and an object boundary annotation of the support sample image, and the query data set including a plurality of query sample images;

obtaining a feature correlation of the query sample image based on the object boundary annotation;

obtaining, based on the feature correlation, a predicted center point annotation of an object in the query sample image;

obtaining a first annotation probability map of center point distribution of the object in the query sample image based on the predicted center point annotation; and

training, by inputting the first annotation probability map and the query sample image into a preset center point detector, the preset center point detector to obtain a trained center point detector, the trained center point detector being configured to annotate a center point of an object in a to-be-annotated sample image.

According to a second aspect, an embodiment of this application provides an image annotation processing apparatus, including:

an obtaining unit, configured to obtain a support data set and a query data set, the support data set including at least one support sample image and an object boundary annotation of the support sample image, and the query data set including a plurality of query sample images;

a matching unit, configured to obtain a feature correlation of the query sample image based on the object boundary annotation;

a prediction unit, configured to obtain, based on the feature correlation, a predicted center point annotation of an object in the query sample image;

a processing unit, configured to obtain a first annotation probability map of center point distribution of the object in the query sample image based on the predicted center point annotation; and

the processing unit being further configured to train, by inputting the first annotation probability map and the query sample image into a preset center point detector, the preset center point detector to obtain a trained center point detector, the trained center point detector being configured to annotate a center point of an object in a to-be-annotated sample image.

According to a third aspect, an embodiment of this application further provides a computer device, including a processor and a memory, where the memory stores a computer program, and when the processor invokes the computer program in the memory, the image annotation processing method according to any one of the embodiments of this application is implemented.

According to a fourth aspect, an embodiment of this application further provides a computer-readable storage medium, having a computer program stored therein, where the computer program is loaded by a processor to implement the image annotation processing method.

According to a fifth aspect, an embodiment of this application further provides a computer program product, including a computer program, where when the computer program is loaded by a processor, the image annotation processing method according to any one of the embodiments of the present disclosure is implemented.

It can be learned from the foregoing content that the embodiments of this application include the following beneficial effects:

In the embodiments of this application, matching is performed on an object region feature of a support sample image and an image feature of a query sample image based on an object boundary annotation of the support sample image, to obtain a feature correlation of the query sample image for predicting a predicted center point annotation of an object in the query sample image; and a preset center point detector may be trained by using the predicted center point annotation of the object in the query sample image to obtain a trained center point detector. On one hand, matching is performed on the object region feature of the support sample image and the image feature of the query sample image, the predicted center point annotation of the object in the query sample image may be predicted, so that positions of center points of some query sample images may be predicted and annotated by using a small amount of manually annotated support sample images. That is, a specific amount of manual annotation data on which an automatic annotation algorithm needs to depend is automatically annotated, so that a specific amount of image annotation data may be generated with only a small amount of manual annotation data (that is, a small amount of support sample images), to supplement the image annotation data on which the automatic annotation algorithm needs to depend. Therefore, when a scenario changes, there is no need to manually annotate images with a large amount of data. On the other hand, the image annotation data may be supplemented in a feature matching manner (that is, a specific amount of query sample images are annotated), so that the preset center point detector is trained by using the query sample images, and the accuracy of the trained center point detector in annotating the position of the center point of the object. Therefore, the embodiments can automatically annotate an image while reducing an amount of manual annotation data, thereby improving the image annotation efficiency.

BRIEF DESCRIPTION OF THE DRAWINGS

FIG. 1 is a schematic diagram of an application scenario of an image annotation processing method according to an embodiment of this application.

FIG. 2 is a schematic flowchart of an embodiment of an image annotation processing method according to an embodiment of this application.

FIG. 3 is a schematic diagram of data exchange between a functional module of a service product and a functional module of an automatic annotation algorithm according to an embodiment.

FIG. 4 is a schematic structural diagram of a small sample target position probability predictor according to an embodiment of this application.

FIG. 5 is a schematic diagram of extraction of a local maximum response value of a sliding window according to an embodiment of this application.

FIG. 6 is a schematic diagram of a training process of a trained center point detector according to an embodiment of this application.

FIG. 7 is a schematic diagram of an application process of a trained center point detector according to an embodiment of this application.

FIG. 8 is a schematic diagram of description of an image annotation processing process according to an embodiment of this application.

FIG. 9 is a schematic structural diagram of an embodiment of an image annotation processing apparatus according to an embodiment of this application.

FIG. 10 is a schematic structural diagram of a computer device according to an embodiment of this application.

DESCRIPTION OF EMBODIMENTS

The technical solutions in the embodiments of this application are clearly and completely described below with reference to the accompanying drawings in the embodiments of this application. Apparently, the embodiments described herein are merely some rather than all of the embodiments of this application. All other embodiments obtained by a person skilled in the art based on the embodiments of this application without creative efforts shall fall within the protection scope of this application.

In the description of the embodiments of this application, the terms "first" and "second" are configured for distinguishing different objects, and cannot be understood as indicating or implying relative importance or implicitly indicating a quantity of indicated technical features. A feature defined by "first" or "second" may explicitly or implicitly include one or more of such features, and the term "first" or "second" is not configured for describing a specific sequence. In addition, the terms "include", "have", and any variant thereof are intended to cover non-exclusive inclusion.

In specific implementations of this application, when related data such as a support sample image (for example, an image when a user wears an XR product such as a handheld object), a query sample image, and the like involving user information is applied to a specific product or technology in the embodiments of this application, permission or agreement from the user needs to be obtained, and collection, usage, and processing of the related data need to comply with related laws, regulations, and standards of related countries and regions.

The embodiments of this application provide an image annotation processing method and apparatus, a computer device, and a computer-readable storage medium. The image annotation processing apparatus may be integrated in a computer device, and the computer device may be a server or a device such as a user terminal.

The image annotation processing method in the embodiments may be implemented by a server or may be jointly completed by a terminal and a server. The server may be an independent physical server, or may be a server cluster including a plurality of physical servers or a distributed system, or may be a cloud server providing basic cloud computing services such as a cloud service, a cloud database, cloud computing, a cloud function, cloud storage, a network service, cloud communication, a middleware service, a domain name service, a security service, a CDN, big data, and an artificial intelligence platform, but is not limited thereto. The terminal may be a smartphone, a tablet computer, a notebook computer, a desktop computer, a smart speaker, a smartwatch, or the like, but is not limited thereto. The terminal and the server may be directly or indirectly connected in a wired or wireless communication manner, but is not limited in this application.

The following describes this method by using an example in which the image annotation processing method is jointly implemented by the terminal and the server.

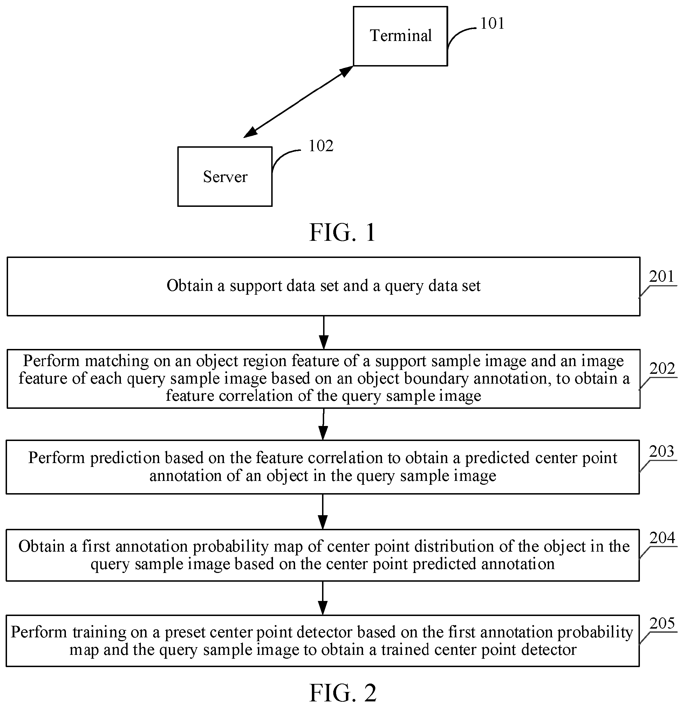

Referring to FIG. 1, the image annotation processing system provided in the embodiments of the present disclosure includes a terminal 101, a server 102, and the like. The terminal 101 may be connected to the server 102 through a network, for example, connected through a wired or wireless network.

The terminal 101 may obtain a support data set and a query data set, where the support data set includes at least one support sample image and an object boundary annotation of the support sample image, and the query data set includes a plurality of query sample images. The terminal sends the support data set and the query data set to the server 102. The server 102 may be configured to: receive the support data set and the query data set that are transmitted by the terminal 101, and obtain a feature correlation of the query sample image based on the object boundary annotation (for example, the feature correlation indicates a similarity between the support sample image and the query sample image); obtain, based on the feature correlation, a predicted center point annotation of an object in the query sample image; obtain a first annotation probability map of center point distribution of the object in the query sample image based on the predicted center point annotation; and train, by inputting the first annotation probability map and the query sample image into a preset center point detector, the preset center point detector to obtain a trained center point detector, where the trained center point detector is configured to annotate a center point of an object in a to-be-annotated sample image.

The image annotation processing method provided in this embodiment specifically may involve an artificial intelligence cloud service, the following is described by using an example in which an execution entity of the image annotation processing method is a computer device, and the execution entity is omitted in the following description for simplifying the description.

The artificial intelligence cloud service is also generally referred to as AI as a Service (AIaaS). This a current mainstream service manner of an artificial intelligence platform. Specifically, an AIaaS platform divides several common AI services, and provides an independence or package service on cloud. This service mode is similar to providing an AI theme shop: all developers may access to use one or more artificial intelligence services provided by the platform through an API interface, and some senior developers may further deploy and operate an exclusive cloud artificial intelligence service by using an AI framework and AI basic infrastructure provided by the platform.

The following provides detailed description respectively with reference to the accompanying drawings. A description sequence of the following embodiments is not construed as a limitation on a preferred sequence of the embodiments. Although a logic sequence is shown in the flowchart, in some cases, the shown or described operations may be performed in a sequence different from the sequence in the flowchart.

As shown in FIG. 2, a specific procedure of the image annotation processing method may include the following Operation 201 to Operation 205:

201. Obtain a support data set and a query data set.

The support data set includes at least one support sample image and an object boundary annotation of the support sample image, and the query data set includes a plurality of query sample images.

In an actual service scenario, there may be many objectives for performing annotation processing on an image. For example, annotation processing is performed on an object in the image to cause a target model to learn to detect the object. In this embodiment, description is provided by using an example in which "the objective for performing annotation processing on an image" is to "perform annotation processing on an object in the image to cause a target model to learn to detect the object".

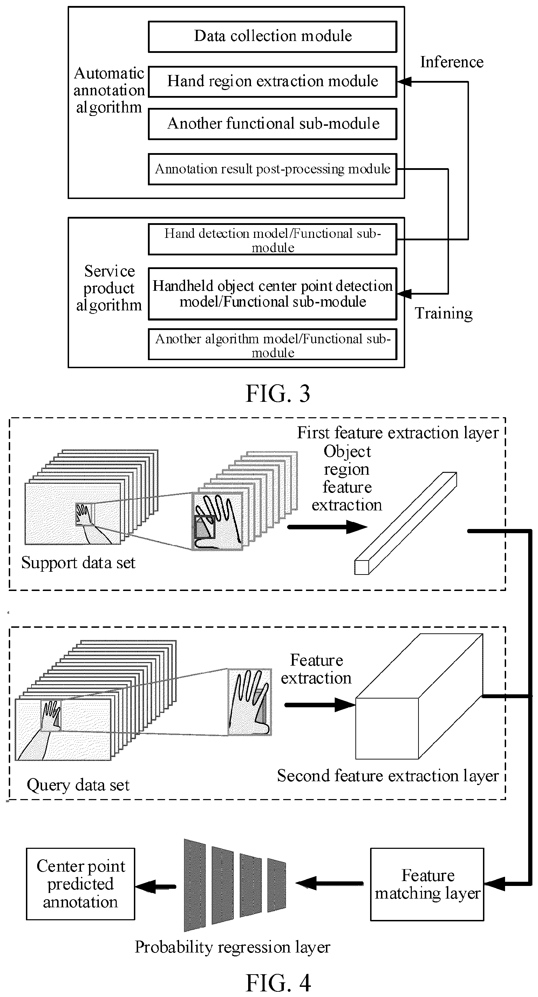

A training data set is a set of sample images for training the target model, and the training data set specifically may include support sample images, query sample images, and other to-be-annotated sample images. As shown in FIG. 3, the target model may be a model in a service product and configured to detect a center point of an object, or may be a functional sub-module in a service product and configured to detect a center point of an object. For example, a user with a handheld object is a common scenario in an extended reality (XR) product application, accurate perception and analysis on the handheld object of the user is an important basis of the abundance and immersive feeling of interaction actions of the user, and a model or a functional sub-module in the XR product application and configured to detect a center point of the handheld object may be used as the target model; and the target model is trained by using the training data set. Extended reality is an environment in which reality and virtuality are combined and human-computer interaction is allowed and generated by using computer technologies and a wearable device.

For ease of understanding, the following first describes an applicable scenario of this embodiment. As shown in FIG. 3, FIG. 3 is a schematic diagram of data exchange between a functional module of a service product and a functional module of an automatic annotation algorithm according to this embodiment, where an example in which a target model is a model (that is, a handheld object center point detection model) "configured to detect a handheld object of a user during usage of an XR product", and support sample images, query sample images, and other to-be-annotated sample images may be used as a training data set to train the handheld object center point detection model. In this embodiment, only a small amount of support sample images need to be annotated manually as a basis for starting training, and a predicted center point annotation of each query sample image is predicted through a small-sample target position probability predictor; and a preset center point detector is trained by using the predicted center point annotation of the query sample image and manual annotations of the support sample images, so that a trained center point detector may be applied to iteratively annotate a position of a center point of an object in a to-be-annotated sample image. In FIG. 3, a service product algorithm specifically may include:

① a hand detection model (or the hand detection model may be set in the form of a hand detection functional sub-module), configured to detect a hand region in an image;

② a handheld object center point detection model (or the handheld object center point detection model may be set in the form of a handheld object center point detection functional sub-module), configured to detect a center point of a handheld object in an image; and

③ another algorithm model (or set in the form of another functional sub-module).

An automatic annotation algorithm includes:

① a data collection module, configured to collect a training data set, for example, a support sample image and a query sample image;

② a hand region extraction module, configured to detect a hand region in the query sample image, where for example, the hand detection model in the service product algorithm may be used to perform hand region detection on the query sample image to obtain a hand region image of the query sample image;

③ another functional sub-module; and

④ an annotation result post-processing module, configured to perform object center point annotation processing on each image in the training data set, for example: obtain a corresponding object center point annotation based on an object boundary annotation that has been manually annotated in the support sample image; perform object center point prediction on each query sample image in a query data set by using a support data set to obtain a predicted center point annotation of an object of the query sample image; or perform prediction on the to-be-annotated sample image by using the trained center point detector, to obtain annotation coordinates of the center point of the object in the to-be-annotated sample image.

For ease of understanding, the following describes some terms mentioned in this embodiment:
Small-sample: A machine learning model is generally required to be capable of learning from a very few amount of samples to obtain knowledge.

Center point detection: This is to predict a position of a center point of a target of interest (for example, the object mentioned in this application) by using an algorithm.

The support sample image is an image in which an object is manually annotated in the training data set. An example in which the target model is a model "configured to detect a handheld object of a user during usage of an XR product" is used, that is, a scenario of performing annotation processing on a handheld object is used as an example, an image when the user wears the XR product with an object in hand may be collected as a support sample image, and the object in the support sample image is manually annotated to obtain an object boundary annotation of the support sample image.

The query sample image is an image in which an object is automatically annotated by using a support data set and the object does not need to be manually annotated in the training data set. An example in which the target model is a model "configured to detect a handheld object of a user during usage of an XR product" is used, that is, a scenario of performing annotation processing on a handheld object is used as an example, an image when the user wears the XR product with an object in hand may be collected as a query sample image.

A similarity between the support sample image and the query sample image lies in that: both the support sample image and the query sample image are images in the training data set configured for training the target model, and the support sample image and the query sample image belong to the same object annotation scenario; and a difference between the support sample image and the query sample image lies in that: the support sample image is an image in which an object needs to be manually annotated, but the query sample image is an image in which an object does not need to be manually annotated.

The object boundary annotation is configured for indicating a boundary box of the object in the support sample image, and the object boundary annotation may be completed manually. For example, an example in which the target model is a model "configured to detect a handheld object of a user during usage of an XR product" is used, that is, a scenario of performing annotation processing on a handheld object is used as an example, a boundary box of the handheld in the support sample image may be manually annotated.

For example, m images of the handheld object may be collected, n images are randomly selected as support sample images to form a support data set (that is, the support data set includes n support sample images), and the remaining (m-n) images are used as query sample images to form a query data set (the query data set includes (m-n) query sample images). In this embodiment, the predicted center point annotation of the object in the query sample image is predicted in a feature matching manner. Therefore, n≪m may be set. For example, a value of n may be 10, and a value of m may be 1000000. In this way, a quantity of sample images with a position of an object center point annotated is expanded, the preset center point detector is trained, and the position of the object center point is iteratively annotated, so that images may be automatically annotated, thereby greatly reducing a quantity of images in which a position of an object center point needs to be manually annotated.

202. Perform matching on an object region feature of the support sample image and an image feature of each query sample image based on the object boundary annotation, to obtain a feature correlation of the query sample image.

In embodiments of the application, the feature correlation is an indicator reflecting a feature similarity degree between the query sample image and the support data set. In some embodiments, the feature correlation of the query sample image may be any parameter that indicates or represents a degree of correlation between the object region feature of the support sample image and the image feature of the query sample image. For example, in some embodiments, the feature correlation indicates a similarity between the support sample image and the query sample image. In some embodiments, the feature correlation may include any one of a cosine similarity, a Euclidean distance, a Manhattan distance, a Mahalanobis distance, a degree of overlap or a Hamming distance between the object region feature of the first support sample image and the image feature of the query sample image. In the following description, similarity is used as an example of the feature correlation for purpose of description, while it should be understood that the term "feature correlation" in the present application also covers any one of a cosine similarity, a Euclidean distance, a Manhattan distance, a Mahalanobis distance, a degree of overlap, or a Hamming distance between the object region feature of the first support sample image and the image feature of the query sample image.

There are a plurality of manners for obtaining the feature correlation between the object region feature of the support sample image and the image feature of the query sample image in Operation 202. For example, the manners include:

> 1) Specifically, for each query sample image in the query data set, similarities between the query sample image and various support sample images in the support data set are calculated; and the similarities between the query sample image and the various support sample images in the support data set are fused, and an obtained fusion result is used as the feature correlation of the query sample image. In this case, Operation 202 specifically may include the following Operation 2021A to Operation 2024A:
> 2021A. Obtain the object region features of the various support sample images based on the object boundary annotations of the various support sample images in the support data set.

The object region feature is an object region feature obtained by performing feature extraction on a boundary box region of the object in the support sample image. For example, a scenario of performing annotation processing on a handheld object is used as an example, feature extraction may be performed on the boundary box region of the manually annotated handheld object in the support sample image, to obtain the object region feature of the support sample image.

For example, in a case that the support data set includes 10 support sample images (support sample images A1, A2, A3, ..., and A10), an image feature in the boundary box region of the object in the support sample image A1 may be extracted based on the object boundary annotation of the support sample image A1 to obtain the object region feature of the support sample image A1. Similarly, the object region feature of the support sample image A1, the object region feature of A2, the object region feature of A3, ..., and the object region feature of A10 may be obtained through extraction.

2022A. Perform feature extraction based on the query sample image, to obtain the image feature of the query sample image.

In some embodiments, feature extraction may be performed on a complete query sample image to obtain the image feature of the query sample image. For example, in a case that the query data set includes 1000 query sample images (query sample images B1, B2, B3, ..., and B1000), feature extraction may be performed on the complete query sample image B1, to obtain the image feature of the query sample image B1. Similarly, the image feature of the query sample image B1, the image feature of B2, the image feature of B3, ..., and the image feature of B1000 may be obtained through extraction.

In some other embodiments, feature extraction may be performed on a local region of the query sample image, to obtain the image feature of the query sample image. For example, in a scenario of performing annotation processing on a handheld object, feature extraction may be performed on a hand region in the query sample image to obtain the image feature of the query sample image. In this case, the object in the image (for example, the support sample image or the query sample image) is the handheld object, and Operation 2022A specifically may include: perform hand region detection on the query sample image, to obtain a hand region image of the query sample image; and perform feature extraction on the hand region image, to obtain the image feature of the query sample image. For example, as shown in FIG. 3, an example in which the target model is a model "configured to detect a handheld object of a user during usage of an XR product" is used, and hand region detection may be performed on the query sample image by using the hand detection model in the service product algorithm, to obtain the hand region image of the query sample image.

The hand region image is a region image obtained by performing hand region detection on the query sample image and in which a hand in the query sample image is located. Further, the handheld object may exceed a hand region, to improve the accuracy in annotating a center point of the handheld object, an expand operation may be further performed on the hand region image after the hand region is detected, so that the hand region image can cover the entire handheld object.

2023A. Obtain, based on the object region features of the various support sample images and the image feature of the query sample image, correlations between the various support sample images and the query sample image, for example, by performing matching on the object region features of the various support sample images and the image feature of the query sample image in some embodiments of the application, where the correlations indicate similarities between the various support sample images and the query sample image.

For example, the support data set includes 10 support sample images (support sample images A1, A2, A3, ..., and A10), and the query data set includes 1000 query sample images (query sample images B1, B2, B3, ..., and B1000). In this case, feature matching is performed on the object region features of the support sample images A1, A2, A3, ..., and A10 and the image feature of the query sample image B1 respectively, to obtain correlations between the support sample images A1, A2, A3, ..., and A10 and the query sample image B1 respectively. Similarly, correlations between the support sample images A1, A2, A3, ..., and A10 and the query sample image B2 may be obtained respectively, correlations between the support sample images A1, A2, A3, ..., and A10 and the query sample image B3 may be obtained respectively, ..., and correlations between the support sample images A1, A2, A3, ..., and A10 and the query sample image B1000 may be obtained respectively.

2024A. Fuse the correlations between the various support sample images and the query sample image to obtain the feature correlation of the query sample image.

For ease of understanding, description is provided by following the example of Operation 2023A. For example, a result obtained by fusing (for example, calculating an average value) the correlations between the support sample images A1, A2, A3, ..., and A10 and the query sample image B1 may be used as the feature correlation of the query sample image B1. Similarly, a result obtained by fusing (for example, calculating an average value) the correlations between the support sample images A1, A2, A3, ..., and A10 and the query sample image B2 may be used as the feature correlation of the query sample image B2; ...; and a result obtained by fusing (for example, calculating an average value) the correlations between the support sample images A1, A2, A3, ..., and A10 and the query sample image B 1000 may be used as the feature correlation of the query sample image B1000.

An example in which the support data set includes 2 support sample images (for example, a first support sample image and a second support sample image) is used. in this case, Operation 202 specifically may include:

(1.1) obtain an object region feature of the first support sample image based on an object boundary annotation of the first support sample image; and obtain an object region feature of the second support sample image based on an object boundary annotation of the second support sample image;

(1.2) perform feature extraction based on the query sample image, to obtain the image feature of the query sample image;

(1.3) obtain, based on the object region feature of the first support sample image and the image feature, a first correlation between the first support sample image and the query sample image, for example, by performing matching on the object region feature of the first support sample image and the image feature in some embodiments of the application (for example, the first correlation indicates a first similarity, or a first feature similarity degree, between the first support sample image and the query sample image);

(1.4) obtain, based on the object region feature of the second support sample image and the image feature, a second correlation between the second support sample image and the query sample image, for example, by performing matching on the object region feature of the second support sample image and the image feature in some embodiments of the application (for example, the second correlation indicates a second similarity, or a second feature similarity degree, between the second support sample image and the query sample image); and

(1.5) fuse the first correlation and the second correlation to obtain the feature correlation of the query sample image.

The first support sample image is a support sample image in the support data set; and the second support sample image is a support sample image in the support data set.

The first correlation is a correlation between the first support sample image and the query sample image; and the second correlation is a correlation between the second support sample image and the query sample image.

For example, the object region feature of the first support sample image may be first obtained based on the object boundary annotation of the first support sample image; the object region feature of the second support sample image may be obtained based on the object boundary annotation of the second support sample image; and feature extraction is performed based on the query sample image, to obtain the image feature of the query sample image. Then, a cosine similarity, a Euclidean distance, or a Hamming distance between the object region feature of the first support sample image and the image feature of the query sample image may be calculated as the first correlation between the first support sample image and the query sample image. Similarly, a cosine similarity, a Euclidean distance, or a Hamming distance between the object region feature of the second support sample image and the image feature of the query sample image may be calculated as the second correlation between the second support sample image and the query sample image. Finally, a result obtained by calculating an average value of the first correlation and the second correlation is used as the feature correlation of the query sample image.

By analogy, if the support data set includes 3 support sample images (for example, a first support sample image, a second support sample image, and a third support sample image), a first correlation between the first support sample image and the query sample image, a second correlation between the second support sample image and the query sample image, and a third correlation between the third support sample image and the query sample image may be obtained, and a result of calculating an average value of the first correlation, the second correlation, and the third correlation is used as the feature correlation of the query sample image. In this case, Operation 202 specifically may include:

(2.1) obtain an object region feature of the first support sample image based on an object boundary annotation of the first support sample image; obtain an object region feature of the second support sample image based on an object boundary annotation of the second support sample image; and obtain an object region feature of the third support sample image based on an object boundary annotation of the third support sample image;

(2.2) perform feature extraction based on the query sample image, to obtain the image feature of the query sample image;

(2.3) obtain, based on the object region feature of the first support sample image and the image feature, a first correlation between the first support sample image and the query sample image, for example, by performing matching on the object region feature of the first support sample image and the image feature in some embodiments of the application (for example, the first correlation indicates a first similarity, or a first feature similarity degree, between the first support sample image and the query sample image);

(2.4) obtain, based on the object region feature of the second support sample image and the image feature, a second correlation between the second support sample image and the query sample image, for example, by performing matching on the object region feature of the second support sample image and the image feature in some embodiments of the application (for example, the second correlation indicates a second similarity, or a second feature similarity degree, between the second support sample image and the query sample image);

(2.5) obtain, based on the object region feature of the third support sample image and the image feature, a third correlation between the third support sample image and the query sample image, for example, by performing matching on the object region feature of the third support sample image and the image feature in some embodiments of the application (for example, the third correlation indicates a third similarity, or a third feature similarity degree, between the third support sample image and the query sample image); and

(2.6) fuse the first correlation, the second correlation, and the third correlation to obtain the feature correlation of the query sample image.

2) Specifically, for each query sample image in the query data set, similarities between the query sample image and various support sample images in the support data set are calculated; and a similarity with a maximum value is selected from the similarities between the query sample image and the various support sample images in the support data set as the feature correlation of the query sample image. In this case, Operation 202 specifically may include the following Operation 2021B to Operation 2024B:
2021B. Obtain the object region features of the various support sample images based on the object boundary annotations of the various support sample images in the support data set.

2022B. Perform feature extraction based on the query sample image, to obtain the image feature of the query sample image.

2023B. Obtain, based on the object region features of the various support sample images and the image feature of the query sample image, correlations between the various support sample images and the query sample image, for example, by performing matching on the object region features of the various support sample images and the image feature of the query sample image in some embodiments of the application, where the correlations indicate similarities between the various support sample images and the query sample image.

2024B. Obtain a maximum value of the correlations between the various support sample images and the query sample image as the feature correlation of the query sample image.

203. Perform prediction based on the feature correlation to obtain a predicted center point annotation of an object in the query sample image.

The predicted center point annotation is configured for identifying annotation coordinates of a center point of the object in the query sample image, and the predicted center point annotation is obtained through prediction according to the feature correlation of the query sample image.

Operation 202 and Operation 203 specifically may be implemented by a small-sample target position probability predictor with an unknown class provided in this embodiment. As shown in FIG. 4, the small-sample target position probability predictor includes a first feature extraction layer, a second feature extraction layer, a feature matching layer, and a probability regression layer.

The first feature extraction layer is configured to perform feature extraction on an object region of the support sample image according to the object boundary annotation of the support sample image, to obtain the object region feature of the support sample image.

The second feature extraction layer is configured to perform feature extraction on the query sample image to obtain the image feature of the query sample image.

The feature matching layer is configured to perform matching on the object region feature of the support sample image and the image feature of the query sample image, to obtain the feature correlation of the query sample image.

The probability regression layer is configured to: perform prediction according to the feature correlation of the query sample image, to obtain a probability of coordinates being a position of the object in the query sample image, that is, obtain a first object position distribution map of the query sample image; and extract coordinates of a center point of the object in the query sample image based on the first object position distribution map of the query sample image as the predicted center point annotation of the object in the query sample image.

The first object position distribution map may identify probabilities of different positions being distributed with the object in the query sample image.

The small-sample target position probability predictor with an unknown class may be trained based on the idea of matching learning, and perform similarity calculation through feature space, so that has a higher response to a feature region having a higher similarity with a support feature (that is, the object region feature of the support sample image) in a query feature (that is, the image feature of the query sample image). Therefore, a model can make higher response prediction on an image region (for example, a region of the handheld object) having a higher similarity with the support sample image (for example, a handheld object sample image) on the query sample image.

Therefore, information such as the support sample image, the object boundary annotation of the support sample image, and the query sample image may be inputted into the small-sample target position probability predictor provided in this embodiment, object region feature of the support sample image is obtained by the first feature extraction layer in the small-sample target position probability predictor based on the object boundary annotation of the support sample image; feature extraction is performed through the second feature extraction layer in the small-sample target position probability predictor based on the query sample image, to obtain the image feature of the query sample image; matching is performed on the object region feature of the support sample image and the image feature of the query sample image through the feature matching layer in the small-sample target position probability predictor, to obtain the feature correlation of the query sample image; prediction is performed through the probability regression layer in the small-sample target position probability predictor according to the feature correlation of the query sample image, to obtain the first object position distribution map of the query sample image; and coordinates of the center point of the object in the query sample image are extracted based on the first object position distribution map of the query sample image, to obtain the predicted center point annotation of the object in the query sample image.

In Operation 203, there are a plurality of manners for obtaining the predicted center point annotation of the object in the query sample image. For example, the manners include:

(1) A priori condition is that the query sample image includes at most one object. In this case, Operation 203 specifically may include the following Operation 2031A and Operation 2032A:
2031A. Perform object position prediction based on the feature correlation, to obtain a first object position distribution map of the query sample image.

2032A. Obtain a coordinate value with a maximum object position distribution probability based on the first object position distribution map as the predicted center point annotation of the object in the query sample image.

A size of the first object position distribution map is the same as a size of the query sample image, and each probability corresponds to one pixel position in the first object position distribution map. For example, assuming that the first object position distribution map includes 81 pixels including $(x_1, y_1)$, $(x_1, y_2)$, ..., $(x_1, y_9)$, $(x_2, y_1)$, $(x_2, y_2)$, ..., $(x_2, y_9)$, ..., $(x_9, y_1)$, $(x_9, y_2)$, ..., and $(x_9, y_9)$, where coordinates of each pixel are a probability of being a position of the object, and if coordinates of the pixel $(x_9, y_1)$ corresponds to a maximum probability of being the position of the object, the coordinates of the pixel $(x_9, y_1)$ may be used as the predicted center point annotation of the object in the query sample image.

(2) The query sample image may include one or more objects. In this case, Operation 203 specifically may include the following Operation 2031B to Operation 2033B:
2031B. Perform object position prediction based on the feature correlation, to obtain a first object position distribution map of the query sample image.

The first object position distribution map is an object position distribution probability map obtained through prediction according to the feature correlation of the query sample image and is configured for reflecting a probability of coordinates in the query sample image being the position of the object.

Specifically, prediction may be performed through the probability regression layer in the small-sample target position probability predictor according to the feature correlation of the query sample image, to obtain the first object position distribution map of the query sample image.

2032B. Perform sliding processing on the first object position distribution map, to obtain a local maximum response value of each first sliding window of the first object position distribution map.

The first sliding window is a pixel region obtained by performing sliding on the first object position distribution map based on a window of a fixed size, each pixel region has the fixed size in the first object position distribution map, and pixel regions covered by different first sliding windows may be partially overlapped, which is not limited in this application.

The local maximum response value of the first sliding window is a maximum value of object position distribution probabilities in the first sliding window. For example, the first sliding window includes 9 pixels including $(x_1, y_1)$, $(x_1, y_2)$, $(x_1, y_3)$, $(x_2, y_1)$, $(x_2, y_2)$, $(x_2, y_3)$, $(x_3, y_1)$, $(x_3, y_2)$, and $(x_3, y_3)$, and probabilities of coordinates of the 9 pixels being the position of the object are $p_{11}$, $p_{12}$, $p_{13}$, $p_{21}$, $p_{22}$, $p_{23}$, $p_{31}$, $p_{32}$, and $p_{33}$ respectively. Assuming that $p_{11}$ is a maximum value, the local maximum response value of the first sliding window is $p_{11}$.

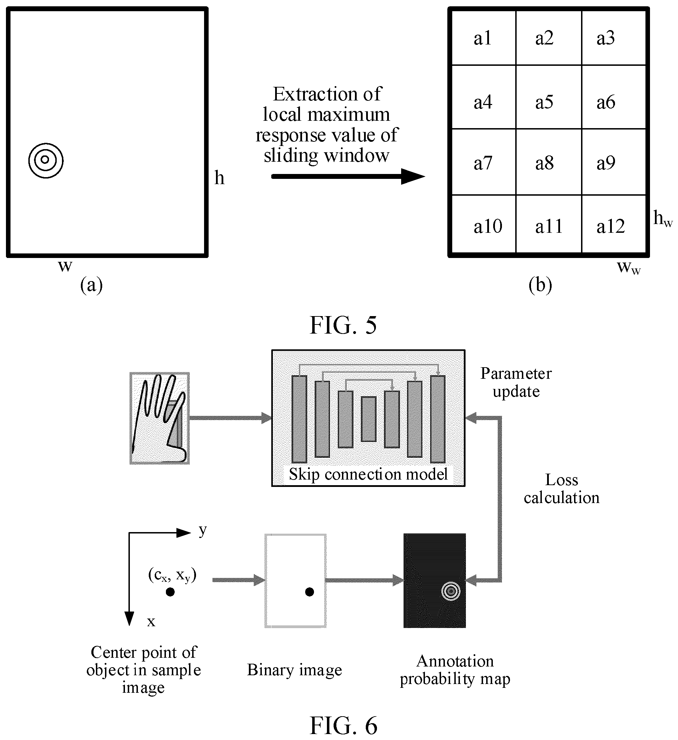

For example, as shown in FIG. 5, FIG. 5 is a schematic diagram of extraction of a local maximum response value of a sliding window according to an embodiment of this application. Assuming that a two-dimensional first object position distribution map whose size is (w, h) is shown in FIG. 5(a), sliding is performed on the first object position distribution map by using a two-dimensional window whose size is (ww, hw), to obtain local maximum response values (for example, local maximum response values of windows 1, 2, 3, ..., and 12 are $a_1$, $a_2$, $a_3$, ..., and $a_{12}$) of first sliding windows (for example, the windows 1, 2, 3, ..., and 12), as shown in FIG. 5(b).

2033B. If the local maximum response value of the first sliding window is greater than a first preset threshold, use a first coordinate value corresponding to the local maximum response value of the first sliding window as the predicted center point annotation.

The first coordinate value is a coordinate value at the local maximum response value of the first sliding window.

For ease of understanding, description is provided by following the example of Operation 2032B. For example, the local maximum response value of the window 1 is a1, and if the local maximum response value a1 of the window 1 is greater than the first preset threshold T1, a coordinate value corresponding to the local maximum response value a1 of the window 1 is used as the predicted center point annotation of the query sample image. If the local maximum response value a1 of the window 1 is less than or equal to the first preset threshold T1, the local maximum response value a1 of the window 1 is filtered out to avoid interference information. Similarly, similar determination may be performed on the windows 1, 2, 3, ..., and 12 sequentially, to obtain corresponding first coordinate values (the local maximum response value t is greater than the first preset threshold T1) as the predicted center point annotation of the query sample image. Therefore, one or more predicted center point annotations of the query sample image may be obtained, thereby automatically annotating the center point of the object in the query sample image.

It can be learned that, by setting the first preset threshold T1 for the local maximum response value of the first sliding window, only when the local maximum response value t of the first sliding window is greater than the first preset threshold T1, the first coordinate value corresponding to the local maximum response value of the first sliding window is used as the predicted center point annotation of the object in the query sample image, so that some interference information may be filtered out, thereby improving the quality of the predicted center point annotation of the object in the query sample image and further improving the quality of automatic annotation of the training data set.

Further, if the local maximum response value of the first sliding window is less than or equal to the first preset threshold, the query sample image is used as the to-be-annotated sample image; and prediction is performed on the to-be-annotated sample image by using the trained center point detector, to obtain annotation coordinates of the center point of the object in the to-be-annotated sample image. Specifically, if the local maximum response value of the first sliding window is less than or equal to the first preset threshold, it indicates that the predicted center point annotation of the query sample image cannot be predicted through the small-sample target position probability predictor. That is, the position of the center point of the object in the query sample image cannot be annotated through the small-sample target position probability predictor.

The to-be-annotated sample image is an image on which prediction needs to be performed through the trained center point detector to obtain the annotation coordinates of the center point of the object in the image. In this embodiment, the to-be-annotated sample image may be a query sample image in which the object cannot be annotated through the small-sample target position probability predictor, or may be any other image in which an object needs to be annotated.

For example, there are a plurality of implementations for "performing prediction on the to-be-annotated sample image by using the trained center point detector, to obtain annotation coordinates of the center point of the object in the to-be-annotated sample image". For example, the implementations include:

1) A priori condition is that the query sample image includes at most one object. In this case, the operation "perform prediction on the to-be-annotated sample image by using the trained center point detector, to obtain annotation coordinates of the center point of the object in the to-be-annotated sample image" specifically may include the following Operation A1 and Operation A2:

A1. Perform prediction on the to-be-annotated sample image by using the trained center point detector, to obtain a second object position distribution map of the to-be-annotated sample image.

The second object position distribution map is an object position distribution probability map obtained by performing prediction on the to-be-annotated sample image by using the trained center point detector and is configured for reflecting a probability of coordinates in the to-be-annotated sample image being the position of the object.

For a training process of the trained center point detector, reference may be made to the part of the following Operation 205, and details are not described herein.

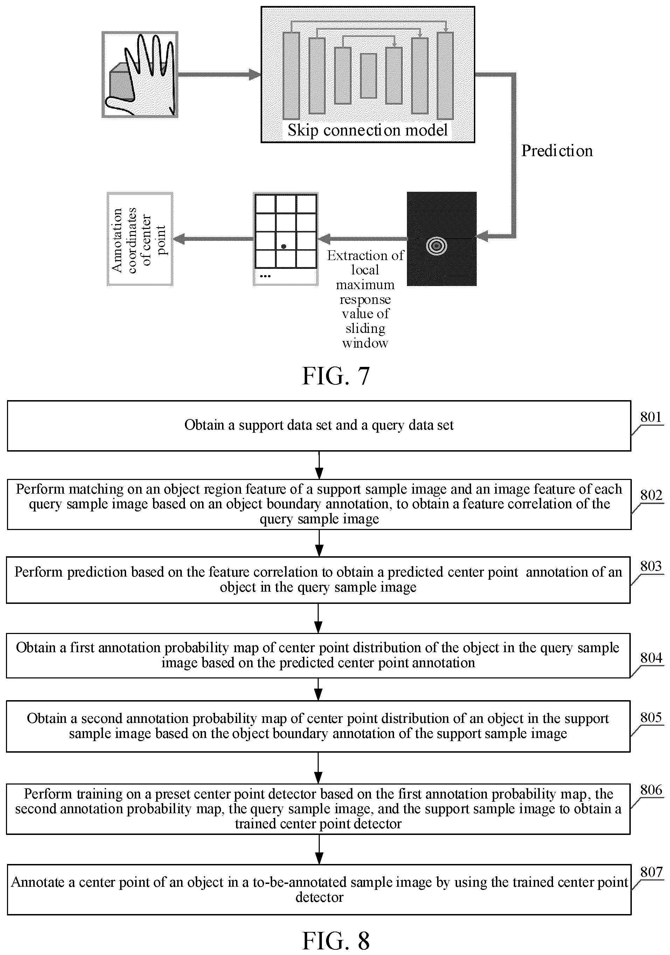

As shown in FIG. 7, an example in which the trained center point detector is a skip connection model is used. The to-be-annotated sample image may be inputted into the trained center point detector, to perform processing such as feature extraction and upsampling on the to-be-annotated sample image by using the trained center point detector and perform skip connection in the processing process of feature extraction and upsampling, and an output result of the trained center point detector is finally used as the second object position distribution map of the to-be-annotated sample image.

A2. Obtain a coordinate value with a maximum object position distribution probability based on the second object position distribution map as the annotation coordinates of the center point of the object in the to-be-annotated sample image.

For example, assuming that the second object position distribution map includes 36 pixels including (x1, y1), (x1, y2), ..., (x1, y6), (x2, y1), (x2, y2), ..., (x2, y6), ..., (x6, y1), (x6, y2), ..., and (x6, y6), where coordinates of each pixel are a probability of being a position of the object, and if coordinates of the pixel (x2, y1) corresponds to a maximum probability of being the position of the object, the coordinates of the pixel (x2, y1) may be used as the annotation coordinates of the center point of the object in the to-be-annotated sample image.

By analogy, a position of a center point in another to-be-annotated sample image may be annotated by using the trained center point detector.

2) The query sample image may include one or more objects. In this case, the operation "perform prediction on the to-be-annotated sample image by using the trained center point detector, to obtain annotation coordinates of the center point of the object in the to-be-annotated sample image" specifically may include the following Operation B1 to Operation B3:

B1. Perform prediction on the to-be-annotated sample image by using the trained center point detector, to obtain a second object position distribution map of the to-be-annotated sample image.

An implementation of Operation B1 is similar to the implementation of Operation A1, and for details, reference may be made to the foregoing related description, which are not described herein again.

B2. Perform sliding processing on the second object position distribution map, and determine a local maximum response value of each second sliding window of the second object position distribution map.

The second sliding window is a sliding window obtained by performing sliding on the second object position distribution map.

The local maximum response value of the second sliding window is a maximum value of object position distribution probabilities in the second sliding window.

An implementation of Operation B2 is similar to the implementation of Operation 2032B, and for details, reference may be made to the foregoing related description, which are not described herein again.

B3. If the local maximum response value of the second sliding window is greater than a second preset threshold, use a second coordinate value corresponding to the local maximum response value of the second sliding window as the annotation coordinates of the center point of the object in the to-be-annotated sample image.

The second coordinate value is a coordinate value corresponding to the local maximum response value of the second sliding window.

Referring to FIG. 7, in FIG. 7, the second object position distribution map is predicted by using the skip connection model according to the to-be-annotated sample image, and window sliding is performed on the second object position distribution map to extract the local maximum response value, to obtain the annotation coordinates of the center point of the object in the to-be-annotated sample image.

For example, 4 second sliding windows (for example, a window 1, a window 2, a window 3, and a window 4) may be obtained after sliding processing is performed on the second object position distribution map. The local maximum response values of the windows 1, 2, 3, and 4 are respectively a1, a2, a3, and a4, if the local maximum response value a1 of the window 1 is greater than the first preset threshold T1 and the local maximum response value a4 of the window 4 is greater than the first preset threshold T1, a coordinate value corresponding to the local maximum response value a1 of the window 1 and a coordinate value corresponding to the local maximum response value a4 of the window 4 are used as predicted center point annotations of the to-be-annotated sample image. That is, the to-be-annotated sample image includes 2 objects. Therefore, one or more predicted center point annotations of the to-be-annotated sample image may be obtained, thereby automatically annotating the center point of the object in the to-be-annotated sample image.

It can be learned that, by setting the second preset threshold T2 for the local maximum response value of the second sliding window, only when the local maximum response value t of the second sliding window is greater than the second preset threshold T2, the second coordinate value corresponding to the local maximum response value of the second sliding window is used as the predicted center point annotation of the object in the to-be-annotated sample image, so that some interference information may be filtered out, thereby improving the quality of the predicted center point annotation of the object in the to-be-annotated sample image and further improving the quality of automatic annotation of the training data set.

204. Obtain a first annotation probability map of center point distribution of the object in the query sample image based on the predicted center point annotation.

The first annotation probability map is a probability map of the center point position distribution of the object obtained by performing preprocessing according to the predicted center point annotation of the query sample image and is configured for reflecting a probability of coordinates in the query sample image being the position of the center point of the object. That is, the first annotation probability map represents a mapping relationship between each pixel in the query sample image and a probability that the the center point of the object is located at the pixel in the query sample image.

For example, Operation 204 of obtaining a first annotation probability map of center point distribution of the object in the query sample image based on the predicted center point annotation specifically may include: performing feature mapping on the query sample image based on the predicted center point annotation, to obtain a binary image of the query sample image; and performing Gaussian convolution calculation on the binary image, to obtain the first annotation probability map of the center point distribution of the object in the query sample image.

For example, assuming that the predicted center point annotation of the object in the query sample image obtained through prediction in Operation 203 is (cx, xy), mapping may be first performed in a two-dimensional space according to the predicted center point annotation of the object in the query sample image with reference to Formula 1 to obtain a binary image whose size is w×h, where w×h is a size of the query sample image. Convolution calculation is then performed on the binary image of the query sample image by using a Gaussian kernel, to obtain the first annotation probability map of the center point distribution of the object in the query sample image. The binary image of the query sample image is obtained by performing feature mapping on the query sample image; and Gaussian convolution calculation is then performed on the binary image, so that binary coordinates of the position of the center point of the object may be converted into a probability map of center point position distribution of the object, which helps the preset center point detector to learn the center point position distribution of the object.

$$f(x,y) = \begin{cases} 1, \text{if}(x,y) = (c_x, c_y) \\ 0, \text{if}(x,y) = \text{other} \end{cases} \quad \text{Formula 1}$$

In Formula 1, f(x, y) represents a grayscale value of a pixel at coordinates (x, y) in the binary image whose size is w×h.

205. Perform training on a preset center point detector based on the first annotation probability map and the query sample image to obtain a trained center point detector.

The trained center point detector is configured to annotate the center point of the object in the to-be-annotated sample image.

A design of the preset center point detector is not specifically limited. For example, the preset center point detector may be a skip connection model (for example, a ResNet network).

For example, there are a plurality of manners for training the preset center point detector to obtain the trained center point detector in Operation 205. For example, the manners include:

1) Training is performed by using the query sample image. In this case, Operation 205 specifically may include the following Operation 2051A to Operation 2053A:

2051A. Perform prediction on the query sample image by using the preset center point detector, to obtain a first prediction probability map of the center point distribution of the object in the query sample image.

The first prediction probability map is a probability map of the center point position distribution of the object obtained by performing prediction on the query sample image and is configured for reflecting a probability of coordinates in the query sample image being the position of the center point of the object.

For example, the query sample image may be inputted into the preset center point detector, and after processing such as feature extraction and upsampling is performed on the query sample image through the preset center point detector, the first prediction probability map of the center point distribution of the object in the query sample image is finally outputted.

Further, as shown in FIG. 6, to prevent problems such as gradient explosion and gradient vanishing in a training process, skip connection may be further performed in the processing process of feature extraction and upsampling. In this case, Operation 2051A specifically may include: performing feature extraction on the query sample image by using the preset center point detector, to obtain a preliminary feature of the query sample image; performing transformation processing on the preliminary feature of the query sample image by using the preset center point detector, to obtain a transformed feature of the query sample image; and performing skip connection processing based on the preliminary feature and the transformed feature, to obtain the first prediction probability map of the query sample image. The transformation processing may include various data processing performed by technical means transforming a feature, for example, data processing such as convolution, upsampling, or downsampling.

The preliminary feature is a feature obtained by performing feature extraction on the query sample image by using the preset center point detector.

The transformed feature is a feature obtained by performing transformation processing (for example, convolution through a plurality of layers of convolutional layers or upsampling) based on the preliminary feature.

For example, the preset center point detector may include a plurality of layers of convolution structures, a first-layer feature is obtained after processing such as convolution and upsampling is performed on the query sample image by using the preset center point detector at the first layer, and the first-layer feature is used as the preliminary feature of the query sample image; a second-layer feature of the query sample image is obtained after processing such as convolution and upsampling is performed on the preliminary feature at the second layer; ...; and an $n^{th}$-layer feature of the query sample image is obtained after processing such as convolution and upsampling is performed on the preliminary feature at the $n^{th}$ layer, where the $n^{th}$-layer feature may be used as the transformed feature, and skip connection is performed on the preliminary feature and the transformed feature, to finally output the first prediction probability map of the query sample image.

2052A. Obtain a first loss value of the preset center point detector based on the first prediction probability map and the first annotation probability map.

The first loss value is a loss value between the first annotation probability map of the center point distribution of the object in the query sample image and the first prediction probability map of the center point distribution of the object in the query sample image. Specifically, an L2 distance (and a Euclidean distance) between the first annotation probability map and the first prediction probability map may be calculated as the first loss value.

For example, the first annotation probability map of the center point distribution of the object in the query sample image obtained in Operation 204 may be used as a truth value of training loss calculation of the preset center point detector, so that the trained center point detector can learn to predict probability distribution of the position of the center point of the object. In this case, in Operation 2052A, the first loss value between the first annotation probability map of the center point distribution of the object in the query sample image and the first prediction probability map of the center point distribution of the object in the query sample image may be calculated as a training loss value of the preset center point detector.

2053A. Train the preset center point detector based on the first loss value to obtain the trained center point detector.

Specifically, as shown in FIG. 6, back propagation may be performed according to the training loss value of the preset center point detector, to update a model parameter of the preset center point detector, and the trained center point detector is obtained until a preset training stop condition is met.

The preset training stop condition may be set according to an actual scenario requirement, and for example, may be that a quantity of training iterations of the preset center point detector reaches a maximum value, a training loss value of two consecutive training basically does not change, or the like.

2) Training is performed by using the query sample image and the support sample image. In this case, Operation 205 specifically may include the following Operation 2051B to Operation 2056B:

2051B. Perform prediction on the query sample image by using the preset center point detector, to obtain a first prediction probability map of the center point distribution of the object in the query sample image.

2052B. Obtain a first loss value of the preset center point detector based on the first prediction probability map and the first annotation probability map.

Implementations of Operation 2051B and Operation 2052B are similar to the implementations of Operation 2051A and Operation 2052A, and for details, reference may be made to the foregoing related description, which are not described herein again.

2053B. Obtain a second annotation probability map of center point distribution of an object in the support sample image based on the object boundary annotation of the support sample image.

The second annotation probability map is a probability map of the center point position distribution of the object obtained by determining a center point of the object in the support sample image according to the object boundary annotation of the support sample image and performing preprocessing according to the center point of the object in the support sample image and is configured for reflecting a probability of coordinates in the support sample image being the position of the center point of the object.

For example, the center point, for example, (cx, xy) of the object in the support sample image may be first calculated according to the object boundary annotation of the support sample image. Then, mapping may be performed in a two-dimensional space according to the center point of the object in the support sample image with reference to Formula 1 to obtain a binary image whose size is w×h, where w×h is a size of the support sample image. Convolution calculation is then performed on the binary image of the support sample image by using a Gaussian kernel, to obtain the second annotation probability map of the center point distribution of the object in the support sample image.

2054B. Perform prediction on the support sample image by using the preset center point detector, to obtain a second prediction probability map of the center point distribution of the object in the support sample image.

The second prediction probability map is a probability map of the center point position distribution of the object obtained by performing prediction on the support sample image and is configured for reflecting a probability of coordinates in the support sample image being the position of the center point of the object.

2055B. Obtain a second loss value of the preset center point detector based on the second prediction probability map and the second annotation probability map.

The second loss value is a loss value between the second prediction probability map of the center point distribution of the object in the support sample image and the second prediction probability map of the center point distribution of the object in the support sample image. Specifically, an L2 distance (and a Euclidean distance) between the second annotation probability map and the second prediction probability map may be calculated as the second loss value.

An implementation of Operation 2055B is similar to the implementation of Operation 2053A, and for details, reference may be made to the foregoing related description, which are not described herein again.

2056B. Train the preset center point detector based on the first loss value and the second loss value to obtain the trained center point detector.

For example, as shown in FIG. 6, back propagation may be performed by using the first loss value as a training loss value of the preset center point detector to update a parameter of the preset center point detector; and similarly, back propagation may be performed by using the second loss value as a training loss value of the preset center point detector to update the parameter of the preset center point detector, and the trained center point detector is obtained until a preset training stop condition is met.

It can be learned from the above content that, matching is performed on an object region feature of a support sample image and an image feature of a query sample image based on an object boundary annotation of the support sample image, to obtain a feature correlation of the query sample image for predicting a predicted center point annotation of an object in the query sample image; and a preset center point detector may be trained by using the predicted center point annotation of the object in the query sample image to obtain a trained center point detector. On one hand, matching is performed on the object region feature of the support sample image and the image feature of the query sample image, the predicted center point annotation of the object in the query sample image may be predicted, so that positions of center points of some query sample images may be predicted and annotated by using a small amount of manually annotated support sample images. That is, a specific amount of manual annotation data on which an automatic annotation algorithm needs to depend is automatically annotated, so that a specific amount of image annotation data may be generated with only a small amount of manual annotation data (that is, a small amount of support sample images), to supplement the image annotation data on which the annotation annotation algorithm needs to depend. Therefore, when a scenario changes, there is no need to repeatedly and manually annotate images with a large amount of data. On the other hand, the image annotation data may be supplemented in a feature matching manner (that is, a specific amount of query sample images are annotated), so that the preset center point detector is trained by using the query sample images, and the accuracy of the trained center point detector in annotating the position of the center point of the object. Therefore, the embodiments can automatically annotate an image while reducing an amount of manual annotation data, thereby improving the image annotation efficiency.

For ease of understanding, with reference to FIG. 3, FIG. 6, and FIG. 8, a scenario of "detecting a handheld object of a user during usage of an XR product" is used as an example. In this case, the image annotation processing process in the embodiments of this application is described by using an example in which the sample image is a handheld object sample image and the target model is a handheld object center point detection model shown in the service product algorithm part in FIG. 3. As shown in FIG. 8, the image annotation processing process is specifically as follows:

801. A support data set and a query data set are obtained.

The support data set includes at least one support sample image and an object boundary annotation of the support sample image, and the query data set includes a plurality of query sample images.

For example, m images of the handheld object of the user during usage of the XR product may be collected, n images are randomly selected from the m images as the support data set (that is, the support data set includes n support sample images), and the object in the support sample image is annotated manually to obtain the object boundary annotation of the support sample image; and the remaining (m-n) images are used as the query data set (the query data set includes (m-n) query sample images).

802. Matching is performed on an object region feature of the support sample image and an image feature of each query sample image based on the object boundary annotation, to obtain a feature correlation of the query sample image.

803. Prediction is performed based on the feature correlation to obtain a predicted center point annotation of an object in the query sample image.

804. A first annotation probability map of center point distribution of the object in the query sample image is obtained based on the predicted center point annotation.

For example, as shown in FIG. 6, an example in which the preset center point detector is a skip connection model is used, and mapping may be performed in a two-dimensional space according to the predicted center point annotation of the object in the query sample image with reference to Formula 1 to obtain a binary image whose size is w×h, where w×h is a size of the query sample image. Convolution calculation is then performed on the binary image of the query sample image by using a Gaussian kernel, to obtain the first annotation probability map of the center point distribution of the object in the query sample image.

805. A second annotation probability map of center point distribution of an object in the support sample image is obtained based on the object boundary annotation of the support sample image.

For example, as shown in FIG. 6, the center point, for example, (cx, xy) of the object in the support sample image may be first calculated according to the object boundary annotation of the support sample image. Then, mapping may be performed in a two-dimensional space according to the center point of the object in the support sample image with reference to Formula 1 to obtain a binary image whose size is w×h, where w×h is a size of the support sample image. Convolution calculation is then performed on the binary image of the support sample image by using a Gaussian kernel, to obtain the second annotation probability map of the center point distribution of the object in the support sample image.

806. The preset center point detector is trained based on the first annotation probability map, the second annotation probability map, the query sample image, and the support sample image to obtain a trained center point detector.

Specifically, the preset center point detector may be trained by using a query sample image whose predicted center point annotation can be obtained in the query data set and all support sample images in the support data set may be used as a first batch of annotation data to obtain the trained center point detector.

807. A center point of an object in a to-be-annotated sample image is annotated by using the trained center point detector.

Specifically, a query sample image whose predicted center point annotation cannot be predicted in the query data set and another image (for example, a re-collected image of the handheld object of the user during usage of the XR product) may be used as to-be-annotated sample images; and prediction is performed by using the trained center point detector to annotate the center point position of the object. In this case, a second batch of annotation data is obtained.

Finally, the second batch of annotation data obtained by using the trained center point detector to perform prediction and annotation in 807 and the first batch of annotation data may be used as a label of training loss calculation of the handheld object center point detection model in the service product algorithm, to train the handheld object center point detection model, for example, to perform single-task training or multi-task joint training. In this way, the handheld object center point detection model can accurately implement sensing and identification on the handheld object of the user during usage of the XR product, thereby improving capabilities of the XR product in sensing and analyzing actions of the user, and further providing a support for improving the interaction experience of the XR product. For example, a handheld cup or a handheld mobile phone may be identified, so that the XR product can support the user in performing an operation of holding a cup and drinking water or finding a mobile phone and answering a call in a case without taking off a helmet, thereby significantly improving the convenience of the user in using the XR product. In another example, the XR product can sense some racket devices (for example, a table-tennis bat) held by the user, so that various more complex functions based on handheld object interaction may be developed. For example, the user may, in a case of wearing an XR helmet, perform corresponding sports interaction in a virtual reality application while holding an object such as a racket in a real world scenario.

This embodiment may also be applicable to various game scenarios. For example, for a game that needs to identify a limb action of a game player to complete a corresponding game operation, images of the game player in a gaming process may be collected as a support data set and a query data set; image annotation is performed on a training data set according to the support data set and the query data set by using the image annotation processing method in the embodiments; and the annotated training data set is used to train a model for identifying the limb action of the game player, to identify the limb action of the game player to complete a corresponding game operation.

To better implement the image annotation processing method in the embodiments of this application, based on the image annotation processing method, an embodiment of this application further provides an image annotation processing apparatus, and the image annotation processing apparatus may be integrated in a computer device such as a server or a terminal.

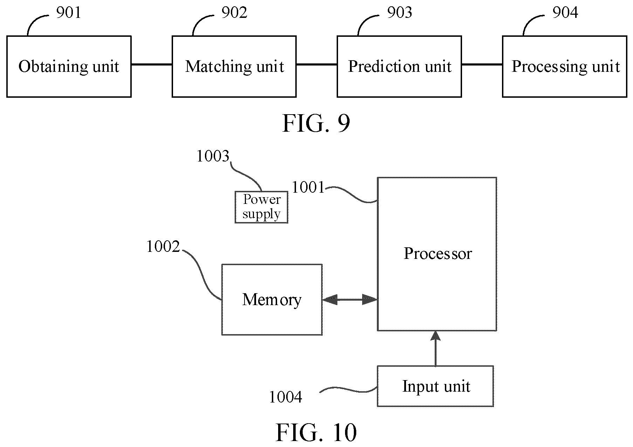

For example, as shown in FIG. 9, FIG. 9 is a schematic structural diagram of an embodiment of an image annotation processing apparatus according to an embodiment of this application. The image annotation processing apparatus may include an obtaining unit 901, a matching unit 902, a prediction unit 903, and a processing unit 904.

The obtaining unit 901 is configured to obtain a support data set and a query data set, where the support data set includes at least one support sample image and an object boundary annotation of the support sample image, and the query data set includes a plurality of query sample images.

The matching unit 902 is configured to obtain a feature correlation of the query sample image based on the object boundary annotation (for example, the feature correlation indicates a similarity between the support sample image and the query sample image).

The prediction unit 903 is configured to obtain, based on the feature correlation, a predicted center point annotation of an object in the query sample image.

The processing unit 904 is configured to obtain a first annotation probability map of center point distribution of the object in the query sample image based on the predicted center point annotation.

The processing unit 904 is further configured to train, by inputting the first annotation probability map and the query sample image into a preset center point detector, the preset center point detector to obtain a trained center point detector, the trained center point detector being configured to annotate a center point of an object in a to-be-annotated sample image.

In some embodiments, the prediction unit 903 is specifically configured to:

perform object position prediction based on the feature correlation, to obtain a first object position distribution map of the query sample image;

perform sliding processing on the first object position distribution map, to obtain a local maximum response value of each first sliding window of the first object position distribution map; and

if the local maximum response value of the first sliding window is greater than a first preset threshold, determine a first coordinate value corresponding to the local maximum response value of the first sliding window as the predicted center point annotation.

In some embodiments, the processing unit 904 is specifically configured to:

if the local maximum response value of the first sliding window is less than or equal to the first preset threshold, determine the query sample image as the to-be-annotated sample image; and

perform prediction on the to-be-annotated sample image by using the trained center point detector, to obtain annotation coordinates of the center point of the object in the to-be-annotated sample image.

In some embodiments, the processing unit 904 is specifically configured to:

perform prediction on the to-be-annotated sample image by using the trained center point detector, to obtain a second object position distribution map of the to-be-annotated sample image;

perform sliding processing on the second object position distribution map, and determine a local maximum response value of each second sliding window of the second object position distribution map; and

if the local maximum response value of the second sliding window is greater than a second preset threshold, determine a second coordinate value corresponding to the local maximum response value of the second sliding window as the annotation coordinates of the center point of the object in the to-be-annotated sample image.

In some embodiments, the processing unit 904 is specifically configured to:

perform prediction on the to-be-annotated sample image by using the trained center point detector, to obtain a second object position distribution map of the to-be-annotated sample image; and

obtain a coordinate value with a maximum object position distribution probability based on the second object position distribution map as the annotation coordinates of the center point of the object in the to-be-annotated sample image.

In some embodiments, the support data set includes a first support sample image and a second support sample image, and the matching unit 902 is specifically configured to:

obtain an object region feature of the first support sample image based on an object boundary annotation of the first support sample image; obtain an object region feature of the second support sample image based on an object boundary annotation of the second support sample image;

perform feature extraction based on the query sample image, to obtain the image feature of the query sample image;

obtain, based on the object region feature of the first support sample image and the image feature, a first correlation between the first support sample image and the query sample image (for example, the first correlation indicates a first similarity between the first support sample image and the query sample image);

obtain, based on the object region feature of the second support sample image and the image feature, a second correlation between the second support sample image and the query sample image (for example, the second correlation indicates a second similarity between the second support sample image and the query sample image); and

fuse the first correlation and the second correlation to obtain the feature correlation.

In some embodiments, the object is a handheld object, and the matching unit 902 is specifically configured to:

perform hand region detection on the query sample image, to obtain a hand region image of the query sample image; and

perform feature extraction on the hand region image, to obtain the image feature of the query sample image.

In some embodiments, the processing unit 904 is specifically configured to:

perform prediction on the query sample image by using the preset center point detector, to obtain a first prediction probability map of the center point distribution of the object in the query sample image;

obtain a first loss value of the preset center point detector based on the first prediction probability map and the first annotation probability map; and

train the preset center point detector based on the first loss value to obtain the trained center point detector.

In some embodiments, the processing unit 904 is specifically configured to:

perform feature extraction on the query sample image by using the preset center point detector, to obtain a preliminary feature of the query sample image;

perform transformation processing on the preliminary feature of the query sample image by using the preset center point detector, to obtain a transformed feature of the query sample image; and

perform skip connection processing based on the preliminary feature and the transformed feature, to obtain the first prediction probability map of the query sample image.

In some embodiments, the processing unit 904 is specifically configured to:

obtain a second annotation probability map of center point distribution of an object in the support sample image based on the object boundary annotation of the support sample image;

perform prediction on the support sample image by using the preset center point detector, to obtain a second prediction probability map of the center point distribution of the object in the support sample image;

obtain a second loss value of the preset center point detector based on the second prediction probability map and the second annotation probability map; and

train the preset center point detector based on the first loss value and the second loss value to obtain the trained center point detector.

In some embodiments, the processing unit 904 is specifically configured to:

perform feature mapping on the query sample image based on the predicted center point annotation, to obtain a binary image of the query sample image; and

perform Gaussian convolution calculation on the binary image, to obtain the first annotation probability map of the center point distribution of the object in the query sample image.

Therefore, the image annotation processing apparatus provided in the embodiments of this application may bring the following technical effects: matching is performed on an object region feature of a support sample image and an image feature of a query sample image based on an object boundary annotation of the support sample image, to obtain a feature correlation of the query sample image for predicting a predicted center point annotation of an object in the query sample image; and a preset center point detector may be trained by using the predicted center point annotation of the object in the query sample image to obtain a trained center point detector. On one hand, matching is performed on the object region feature of the support sample image and the image feature of the query sample image, the predicted center point annotation of the object in the query sample image may be predicted, so that positions of center points of some query sample images may be predicted and annotated by using a small amount of manually annotated support sample images. That is, a specific amount of manual annotation data on which an automatic annotation algorithm needs to depend is automatically annotated, so that a specific amount of image annotation data may be generated with only a small amount of manual annotation data (that is, a small amount of support sample images), to supplement the image annotation data on which the annotation annotation algorithm needs to depend. Therefore, when a scenario changes, there is no need to repeatedly and manually annotate images with a large amount of data. On the other hand, the image annotation data may be supplemented in a feature matching manner (that is, a specific amount of query sample images are annotated), so that the preset center point detector is trained by using the query sample images, and the accuracy of the trained center point detector in annotating the position of the center point of the object. Therefore, the embodiments can automatically annotate an image while reducing an amount of manual annotation data, thereby improving the image annotation efficiency.

In addition, to better implement the image annotation processing method in the embodiments of this application, based on the image annotation processing method, an embodiment of this application further provides a computer device. FIG. 10 is a schematic structural diagram of a computer device according to an embodiment of this application. Specifically:

The computer device may include components such as a processor 1001 including one or more processing cores, a memory 1002 including one or more computer-readable storage media, a power supply 1003, and an input unit 1004. A person of skill in the art can understand that, a structure of the computer device shown in FIG. 10 does not constitute a limitation to the computer device, and the computer device may include more or fewer components than those shown in the figure, or some components may be combined, or a different component deployment may be used.

The processor 1001 is a control center of the computer device, and connects to various parts of the entire computer device by using various interfaces and lines. By running or executing software programs and/or modules stored in the memory 1002, and invoking data stored in the memory 1002, the processor performs various functions and data processing of the computer device, thereby performing overall monitoring on the computer device. In some embodiments, the processor 1001 may include one or more processing cores. Exemplary, the processor 1001 may integrate an application processor and a modem processor. The application processor mainly processes an operating system, a user interface, an application program, and the like. The modem processor mainly processes wireless communication. The foregoing modem processor may either not be integrated into the processor 1001.

The memory 1002 may be configured to store a software program and a module. The processor 1001 runs the software program and the module stored in the memory 1002, to implement various functional applications and data processing. The memory 1002 may mainly include a program storage area and a data storage area. The program storage area may store an operating system, an application program required by at least one function (for example, a sound playing function or an image playing function), or the like. The data storage area may store data created according to usage of the computer device. In addition, the memory 1002 may include a high speed random access memory, and may also include a non-volatile memory, such as at least one magnetic disk storage device, a flash memory, or another volatile solid-state storage device. Correspondingly, the memory 1002 may further include a memory controller, to provide access of the processor 1001 to the memory 1002.

The computer device further includes the power supply 1003 supplying power to the components. Preferably, the power supply 1003 may be logically connected to the processor 1001 by using a power supply management system, to implement functions such as charging, discharging, and power consumption management by using the power supply management system. The power supply 1003 may further include one or more of a direct current or alternate current power supply, a recharging system, a power supply fault detection circuit, a power supply converter or an inverter, a power supply state indicator, or any other components.

The computer device may further include the input unit 1004. The input unit 1004 may be configured to receive entered numeric or character information and generate keyboard, mouse, joystick, optical, or trackball signal input related to user settings and function control.

Although not shown in the figure, the computer device may further include a display unit and the like. Details are not described herein. Specifically, in this embodiment, the processor 1001 in the computer device may load, according to the following instructions, executable files corresponding to processes of one or more application programs into the memory 1002, and the processor 1001 runs the application programs stored in the memory 1002, to implement the operations in any one of the object detection methods provided in the embodiments of this application.

A person of ordinary skill in the art can understand that, all or some operations of various methods in the embodiments may be implemented through instructions, or implemented through instructions controlling relevant hardware, and the instructions may be stored in a computer-readable storage medium and loaded and executed by a processor.

Accordingly, an embodiment of this application provides a computer-readable storage medium, having a computer program stored therein, where the computer program can be loaded by a processor, to perform the operations in any one of the object detection methods provided in the embodiments of this application. The computer-readable storage medium may include: a read-only memory (ROM), a random access memory (RAM), a magnetic disk, an optical disc, or the like.

An embodiment of this application further provides a computer program product including a computer program, and when the computer program product is run on a computer, the computer is caused to implement the method provided in the foregoing embodiments.

A person skilled in the art may clearly understand that, for the purpose of convenient and brief description, for specific working processes of and beneficial effects that can be brought by the image annotation processing apparatus, the computer-readable storage medium, and the computer device and corresponding units described above, reference may be made to the description of the image annotation processing method in the foregoing embodiments, and details are not described herein again.

The image annotation processing method and apparatus, the computer device, and the computer-readable storage medium provided in the embodiments of this application are described in detail above. The principle and implementations of this application are described herein by using specific examples. The description of the foregoing embodiments is merely configured for helping understand the method and core ideas of this application. In addition, a person skilled in the art may make modifications to the specific implementations and application scopes according to the ideas of this application. In conclusion, the content of the specification shall not be construed as a limitation to this application.

## Claims

1. An image annotation processing method, executable by a computer device and comprising:

   obtaining a support data set and a query data set, the support data set comprising at least one support sample image and an object boundary annotation of the support sample image, and the query data set comprising a plurality of query sample images;
   obtaining a feature correlation of the query sample image based on the object boundary annotation;
   obtaining, based on the feature correlation, a predicted center point annotation of an object in the query sample image;
   obtaining a first annotation probability map of center point distribution of the object in the query sample image based on the predicted center point annotation; and

training, by inputting the first annotation probability map and the query sample image into a preset center point detector, the preset center point detector to obtain a trained center point detector, the trained center point detector being configured to annotate a center point of an object in a to-be-annotated sample image.

2. The image annotation processing method according to claim 1, wherein the obtaining, based on the feature correlation, a predicted center point annotation of an object in the query sample image comprises:

performing object position prediction based on the feature correlation, to obtain a first object position distribution map of the query sample image;

performing sliding processing on the first object position distribution map, to obtain a local maximum response value of each first sliding window of the first object position distribution map; and

in response to that the local maximum response value of the first sliding window is greater than a first preset threshold, determining a first coordinate value corresponding to the local maximum response value of the first sliding window as the predicted center point annotation.

3. The image annotation processing method according to claim 2, wherein the method further comprises:

in response to the local maximum response value of the first sliding window is less than or equal to the first preset threshold, determining the query sample image as the to-be-annotated sample image; and

performing prediction on the to-be-annotated sample image by using the trained center point detector, to obtain annotation coordinates of the center point of the object in the to-be-annotated sample image.

4. The image annotation processing method according to claim 3, wherein the performing prediction on the to-be-annotated sample image by using the trained center point detector, to obtain annotation coordinates of the center point of the object in the to-be-annotated sample image comprises:

performing prediction on the to-be-annotated sample image by using the trained center point detector, to obtain a second object position distribution map of the to-be-annotated sample image;

performing sliding processing on the second object position distribution map, and determining a local maximum response value of each second sliding window of the second object position distribution map; and

in response to the local maximum response value of the second sliding window is greater than a second preset threshold, determining a second coordinate value corresponding to the local maximum response value of the second sliding window as the annotation coordinates of the center point of the object in the to-be-annotated sample image.

5. The image annotation processing method according to claim 3, wherein the performing prediction on the to-be-annotated sample image by using the trained center point detector, to obtain annotation coordinates of the center point of the object in the to-be-annotated sample image comprises:

performing prediction on the to-be-annotated sample image by using the trained center point detector, to obtain a second object position distribution map of the to-be-annotated sample image; and

obtaining a coordinate value with a maximum object position distribution probability based on the second object position distribution map as the annotation coordinates of the center point of the object in the to-be-annotated sample image.

6. The image annotation processing method according to claim 1, wherein the support data set comprises a first support sample image and a second support sample image, and the obtaining a feature correlation of the query sample image based on the object boundary annotation comprises:

obtaining an object region feature of the first support sample image based on an object boundary annotation of the first support sample image;

obtaining an object region feature of the second support sample image based on an object boundary annotation of the second support sample image;

performing feature extraction based on the query sample image, to obtain the image feature of the query sample image;

obtaining, based on the object region feature of the first support sample image and the image feature, a first correlation between the first support sample image and the query sample image;

obtaining, based on the object region feature of the second support sample image and the image feature, a second correlation between the second support sample image and the query sample image; and

fusing the first correlation and the second correlation to obtain the feature correlation.

7. The image annotation processing method according to claim 6, wherein the object is a handheld object, and the performing feature extraction based on the query sample image, to obtain the image feature of the query sample image comprises:

performing hand region detection on the query sample image, to obtain a hand region image of the query sample image; and

performing feature extraction on the hand region image, to obtain the image feature of the query sample image.

8. The image annotation processing method according to claim 1, wherein the training the preset center point detector to obtain a trained center point detector comprises:

performing prediction on the query sample image by using the preset center point detector, to obtain a first prediction probability map of the center point distribution of the object in the query sample image;

obtaining a first loss value of the preset center point detector based on the first prediction probability map and the first annotation probability map; and

training the preset center point detector based on the first loss value to obtain the trained center point detector.

9. The image annotation processing method according to claim 8, wherein the performing prediction on the query sample image by using the preset center point detector, to obtain a first prediction probability map of the center point distribution of the object in the query sample image comprises:

performing feature extraction on the query sample image by using the preset center point detector, to obtain a preliminary feature of the query sample image;

performing transformation processing on the preliminary feature of the query sample image by using the preset center point detector, to obtain a transformed feature of the query sample image; and

performing skip connection processing based on the preliminary feature and the transformed feature, to obtain the first prediction probability map of the query sample image.

10. The image annotation processing method according to claim 8, wherein the method further comprises:

obtaining a second annotation probability map of center point distribution of an object in the support sample image based on the object boundary annotation of the support sample image;

performing prediction on the support sample image by using the preset center point detector, to obtain a second prediction probability map of the center point distribution of the object in the support sample image;

obtaining a second loss value of the preset center point detector based on the second prediction probability map and the second annotation probability map; and

the training the preset center point detector based on the first loss value to obtain the trained center point detector comprises:

training the preset center point detector based on the first loss value and the second loss value to obtain the trained center point detector.

11. The image annotation processing method according to any one of claims 1 to 10, wherein the obtaining a first annotation probability map of center point distribution of the object in the query sample image based on the predicted center point annotation comprises:

performing feature mapping on the query sample image based on the predicted center point annotation, to obtain a binary image of the query sample image; and

performing Gaussian convolution calculation on the binary image, to obtain the first annotation probability map of the center point distribution of the object in the query sample image.

12. An image annotation processing apparatus, comprising:

an obtaining unit, configured to obtain a support data set and a query data set, the support data set comprising at least one support sample image and an object boundary annotation of the support sample image, and the query data set comprising a plurality of query sample images;

a matching unit, configured to obtain a feature correlation of the query sample image based on the object boundary annotation;

a prediction unit, configured to obtain, based on the feature correlation, a predicted center point annotation of an object in the query sample image;

a processing unit, configured to obtain a first annotation probability map of center point distribution of the object in the query sample image based on the predicted center point annotation; and

the processing unit being further configured to train, by inputting the first annotation probability map and the query sample image into a preset center point detector, the preset center point detector to obtain a trained center point detector, the trained center point detector being configured to annotate a center point of an object in a to-be-annotated sample image.

**13.** A computer device, comprising a memory, a processor, and a computer program stored in the memory and executable on the processor, wherein the processor, when executing the program, implements the image annotation processing method according to any one of claims 1 to 11.

**14.** A computer-readable storage medium, having a computer program stored therein, wherein when the computer program is executed by a processor, the image annotation processing method according to any one of claims 1 to 11 is implemented.

**15.** A computer program product, comprising a computer program, wherein when the computer program is executed by a processor, the image annotation processing method according to any one of claims 1 to 11 is implemented.

Terminal — 101

Server — 102

## FIG. 1

Obtain a support data set and a query data set | 201

Perform matching on an object region feature of a support sample image and an image feature of each query sample image based on an object boundary annotation, to obtain a feature correlation of the query sample image | 202

Perform prediction based on the feature correlation to obtain a predicted center point annotation of an object in the query sample image | 203

Obtain a first annotation probability map of center point distribution of the object in the query sample image based on the center point predicted annotation | 204

Perform training on a preset center point detector based on the first annotation probability map and the query sample image to obtain a trained center point detector | 205

## FIG. 2

FIG. 3

Probability regression layer

FIG. 4

(a)    Extraction of local maximum response value of sliding window →

| a1 | a2 | a3 |
| a4 | a5 | a6 |
| a7 | a8 | a9 |
| a10 | a11 | a12 |

(b)

FIG. 5

Parameter update

Skip connection model

Loss calculation

$(c_x, x_y)$

Center point of object in sample image

Binary image

Annotation probability map

FIG. 6

Skip connection model

Prediction

Annotation coordinates of center point

Extraction of local maximum response value of sliding window

FIG. 7

| Obtain a support data set and a query data set | 801 |
|---|---|

| Perform matching on an object region feature of a support sample image and an image feature of each query sample image based on an object boundary annotation, to obtain a feature correlation of the query sample image | 802 |
|---|---|

| Perform prediction based on the feature correlation to obtain a predicted center point annotation of an object in the query sample image | 803 |
|---|---|

| Obtain a first annotation probability map of center point distribution of the object in the query sample image based on the predicted center point annotation | 804 |
|---|---|

| Obtain a second annotation probability map of center point distribution of an object in the support sample image based on the object boundary annotation of the support sample image | 805 |
|---|---|

| Perform training on a preset center point detector based on the first annotation probability map, the second annotation probability map, the query sample image, and the support sample image to obtain a trained center point detector | 806 |
|---|---|

| Annotate a center point of an object in a to-be-annotated sample image by using the trained center point detector | 807 |
|---|---|

FIG. 8

| 901 | | 902 | | 903 | | 904 |
|---|---|---|---|---|---|---|
| Obtaining unit | | Matching unit | | Prediction unit | | Processing unit |

FIG. 9

Power supply 1003

Processor 1001

Memory 1002

Input unit 1004

FIG. 10

## INTERNATIONAL SEARCH REPORT

| International application No. |
|---|
| **PCT/CN2024/071907** |

| A. | CLASSIFICATION OF SUBJECT MATTER |
|---|---|

G06V10/774(2022.01)i; G06V10/44(2022.01)i; G06T7/10(2017.01)i

According to International Patent Classification (IPC) or to both national classification and IPC

| B. | FIELDS SEARCHED |
|---|---|

Minimum documentation searched (classification system followed by classification symbols)

IPC:G06V; G06T

Documentation searched other than minimum documentation to the extent that such documents are included in the fields searched

Electronic data base consulted during the international search (name of data base and, where practicable, search terms used)

CNTXT, ENTXT, VEN, DWPI, CNKI, IEEE: 图像, 小样本, 标注, 概率, 概率图, 检测器, 模型, 学习, 训练, 样本, 预测, 预测标注, image, annotat+, mark+, small sample, object, detect, feature, extract+, deep learning, qurey branch, support branch, interference, predict+, probability, boundary

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 113838058 A (CHONGQING UNIVERSITY OF POSTS AND TELECOMMUNICATIONS) 24 December 2021 (2021-12-24) <br> description, paragraphs 0047-0067, and figures 1-4 | 1-15 |
| A | CN 114638973 A (SUZHOU KEDA TECHNOLOGY CO., LTD.) 17 June 2022 (2022-06-17) <br> entire document | 1-15 |
| A | CN 115019103 A (HANGZHOU DIANZI UNIVERSITY) 06 September 2022 (2022-09-06) <br> entire document | 1-15 |
| A | US 11205098 B1 (INSTITUTE OF AUTOMATION, CHINESE ACADEMY OF SCIENCES) 21 December 2021 (2021-12-21) <br> entire document | 1-15 |
| A | US 2019294705 A1 (MICROSOFT TECHNOLOGY LICENSING, LLC) 26 September 2019 (2019-09-26) <br> entire document | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 March 2024** | **28 March 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/071907** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2022027666 A1 (ACCENTURE GLOBAL SOLUTIONS LIMITED) 27 January 2022 (2022-01-27)<br>      entire document | 1-15 |

Form PCT/ISA/210 (second sheet) (July 2022)

## INTERNATIONAL SEARCH REPORT
### Information on patent family members

International application No.

**PCT/CN2024/071907**

| Patent document cited in search report | | | Publication date (day/month/year) | Patent family member(s) | | | Publication date (day/month/year) |
|---|---|---|---|---|---|---|---|
| CN | 113838058 | A | 24 December 2021 | None | | | |
| CN | 114638973 | A | 17 June 2022 | None | | | |
| CN | 115019103 | A | 06 September 2022 | None | | | |
| US | 11205098 | B1 | 21 December 2021 | CN | 112560876 | A | 26 March 2021 |
| US | 2019294705 | A1 | 26 September 2019 | None | | | |
| US | 2022027666 | A1 | 27 January 2022 | EP | 3944133 | A1 | 26 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023102468918